(19) Europäisches Patentamt
European Patent Office
Office européen des brevets

(11) **EP 3 346 570 B1**

(12) **EUROPEAN PATENT SPECIFICATION**

(45) Date of publication and mention
of the grant of the patent:
**10.06.2020 Bulletin 2020/24**

(51) Int Cl.:
*H02J 3/14* *(2006.01)*    *H02J 3/38* *(2006.01)*
*H02J 7/35* *(2006.01)*    *H02J 1/10* *(2006.01)*
*H02J 1/14* *(2006.01)*

(21) Application number: **16841819.2**

(22) Date of filing: **30.08.2016**

(86) International application number:
**PCT/JP2016/075255**

(87) International publication number:
**WO 2017/038787 (09.03.2017 Gazette 2017/10)**

(54) **POWER SUPPLY DEVICE**

STROMVERSORGUNGSVORRICHTUNG

DISPOSITIF D'ALIMENTATION ÉLECTRIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.08.2015 JP 2015171504**

(43) Date of publication of application:
**11.07.2018 Bulletin 2018/28**

(73) Proprietors:
• **KOWA COMPANY, LTD.**
**Naka-ku**
**Nagoya-shi**
**Aichi 460-8625 (JP)**
• **TOKYO RECTIFIER CO., LTD.**
**Tama-ku**
**Kawasaki-shi**
**Kanagawa 214-0021 (JP)**

(72) Inventors:
• **KATO Akitoshi**
**Kawasaki-shi**
**Kanagawa 214-0021 (JP)**
• **MANDOKORO Hiroaki**
**Tokyo 103-0023 (JP)**

(74) Representative: **HGF Limited**
**8th Floor**
**140 London Wall**
**London EC2Y 5DN (GB)**

(56) References cited:
WO-A1-2011/162025    JP-A- H11 332 128
JP-A- 2007 060 796    JP-A- 2012 228 028
JP-A- 2014 064 357    JP-A- 2014 230 455
JP-A- 2015 061 439    US-B1- 6 433 522

EP 3 346 570 B1

## Description

[Technical Field]

The present invention relates to a power supply device.

[Background Art]

A conventional power supply device which receives power from an electric power system and an electric power generator, accumulates power in a storage battery and supplies power to a load is known (refer to Patent Document 1, for example). Patent Document 1 discloses the following technology. When a solar power generator does not generate power, power is discharged from a power storage device and supplied to a load. When the solar power generator generates power and there is surplus power, the power storage device is charged with a predetermined amount of power in order to set the amount of power supplied from a commercial power supply to a preset first power amount. Accordingly, the sum of the amount of power charged in the power storage device and the amount of power consumed by the load increases by the first power amount compare to the amount of power supplied from the solar power generator. Furthermore, JP H11 332128 A describes a power supply system provided with a solar cell and a power storage device, and JP 2015 061439 A/US 2018/361859 A1 describes a charging facility configured to collect DC power supplied from power supply devices and use said power to charge an on-board rechargeable battery of an electric vehicle.

[Citation List]

[Patent Literature]

[Patent Document 1]
Japanese Unexamined Patent Application, First Publication No. 2014-165952

[Summary of Invention]

[Technical Problem]

However, in the above-described technology, charge and discharge amounts with respect to the power storage device are adjusted. It is not easy to set the amount of power supplied from the commercial power supply to a preset power amount.
An object of the present invention is to provide a power supply device which can easily adjust the amount of system power used.

[Solution to Problem]

One aspect of the present invention to achieve the aforementioned object is a power supply device comprising: a first input terminal configured to be supplied AC power from a system; a first power converter configured to convert AC power supplied via the first input terminal into DC power; a second input terminal configured to be supplied power from an electric power generator; a second power converter configured to convert power supplied via the second input terminal into DC power; a storage battery; a connection bus connected to an output side of the first power converter, an output side of the second power converter, and the storage battery; an output terminal configured to output some of DC power obtained via the connection bus; and a controller configured to control the first power converter such that the amount of AC power supplied from the system does not exceed an upper limit value.
The invention is set out in the appended set of claims.

[Advantageous Effects of Invention]

According to the present invention, it is possible to provide a power supply device which can easily adjust the amount of system power used.

[Brief Description of Drawings]

Fig. 1 is a schematic diagram of a power supply device 1 of the present embodiment.

Fig. 2 is a diagram (1) showing an example of the operation of the power supply device 1.

Fig. 3 is a diagram (2) showing an example of the operation of the power supply device 1.

Fig. 4 is a schematic diagram of a power converter 17 of the present embodiment.

[Description of Embodiments]

Hereinafter, a power supply device according to an embodiment of the present invention will be described with reference to the drawings.

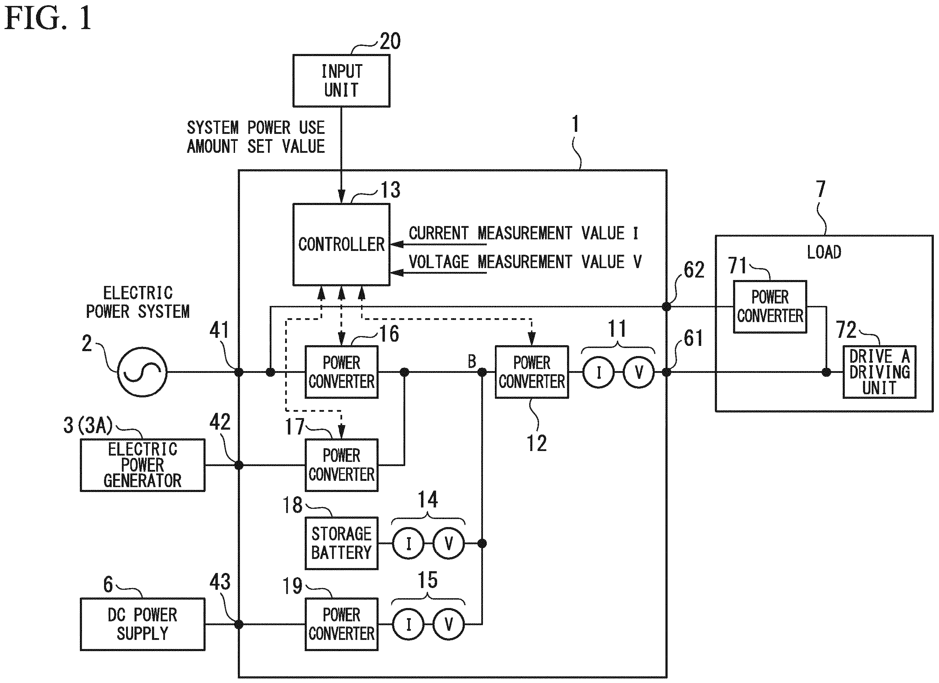

Fig. 1 is a schematic diagram of a power supply device 1 according to the present embodiment.
The power supply device 1 at least receives AC power supplied from an electric power system 2 (commercial power supply) and power supplied from an electric power generator 3 according to a predetermined rule and provides some of the received power to a load 7. Further, the power supply device 1 receives DC power supplied from a DC power supply 6 and also provides some of the received power to the load 7.
The power supply device 1 includes an input terminal 41 (first input terminal), an input terminal 42 (second input terminal) and an output terminal 61. AC power is supplied to the input terminal 41 from the electric power system 2. Power is supplied to the input terminal 42 from the electric power generator 3. The power input to the input terminal 41 and the input terminal 42 is distributed to each output system via a connection bus B and output from the output terminal 61.

Further, the power supply device 1 includes an input terminal 43 (third input terminal) and an AC power output terminal 62. The input terminal 43 (third input terminal) supplies DC power to the connection bus B. The AC power output terminal 62 outputs AC power.

The power supply device 1 includes detectors 11, 14 and 15, a power converter 12 (third power converter), a controller 13, a power converter 16 (first power converter), a power converter 17 (second power converter), a storage battery 18, a power converter 19, an input unit 20, and the connection bus B.

The connection bus B is connected to the output side of the power converter 16, the output side of the power converter 17, the power converter 19 and the storage battery 18. DC power is supplied to the connection bus B from each of the aforementioned units.

The detector 11 is provided at the output side of the power converter 12 and detects a current output and a voltage output from the power converter 12. The detector 14 is provided between the storage battery 18 and the connection bus B and detects a charging/discharging current of the storage battery 18 and a voltage across terminals of the storage battery 18. The detector 15 is provided between the power converter 19 and the connection bus B and detects a current flowing from the input terminal 43 and a voltage at the input terminal 43 of the power converter 19. A measurement result detected by each of the detector 11, the detector 14 and the detector 15 is provided to the controller 13.

The power converter 16 converts AC power supplied from the electric power system 2 via the input terminal 41 into DC power and provides the converted DC power to the connection bus B in the power supply device 1. The power converter 16 detects at least any one of the AC power before conversion and the DC power after conversion and performs power conversion within a range in which the detected power does not exceed an upper limit value indicated by the controller 13. For example, when the detected power is equal to or lower than the upper limit value indicated by the controller 13, the power converter 16 supplies the converted DC power at a predetermined output voltage to the connection bus B. On the other hand, when the detected power exceeds the upper limit value indicated by the controller 13, the power converter 16 decreases the output voltage to be within a predetermined range.

The power converter 17 converts power supplied from the electric power generator 3 via the input terminal 42 into DC power and provides the converted DC power to the connection bus B in the power supply device 1. For example, the electric power generator 3 corresponds to various power generation facilities such as a solar power generation apparatus 3A (PV) and a fuel cell. The power converter 17 detects at least any one of the power before conversion and the DC power after conversion and performs power conversion within a range in which the detected power does not exceed an upper limit value indicated by the controller 13. For example, when the detected power is equal to or lower than the upper limit value indicated by the controller 13, the power converter 17 supplies the converted DC power at a predetermined output voltage to the connection bus B. On the other hand, when the detected power exceeds the upper limit value indicated by the controller 13, the power converter 17 decreases the output voltage to be within a predetermined range.

In this manner, power supplied to the input of the power converter 17 may be any one of AC power and DC power. In the following description, the solar power generation apparatus 3A will be exemplified as the electric power generator 3. The solar power generation apparatus 3A supplies DC power to the power converter 17. The power converter 17 converts the DC power supplied from the electric power generator 3 into DC power. Meanwhile, the solar power generation apparatus 3A is solar battery panel including a solar battery cell, a solar battery string or the like, and a converter such as a so-called power conditioning system (PCS) is not provided for connection from the solar power generation apparatus 3A to the input terminal 42.

The storage battery 18 is composed of various batteries such as a lead battery and a lithium ion battery or a combination of various batteries. In the case of the present embodiment, the connection bus B and the storage battery 18 are connected without a power converter interposed therebetween, for example. According to this configuration, a loss on power conversion when charging and discharging are performed is reduced.

The power converter 19 converts DC power supplied from the DC power supply 6 via the input terminal 43 into DC power in which the output voltage thereof is stabilized and provides the converted DC power to the connection bus B in the power supply device 1. For example, the DC power supply 6 is DC power supply equipment or the like which is installed as an emergency power supply of a facility (building). The power converter 19 adjusts the output voltage using a target voltage indicated by the controller 13 as a reference and provides the output voltage to the connection bus B. The output voltage of the power converter 19 is adjusted to the target voltage and thus to be a minimum voltage of the connection bus B.

The power converter 12 is provided to correspond to the output terminal 61. The power converter 12 converts DC power supplied from the connection bus B and provides the converted DC power to the output terminal 61. Consequently, some of the DC power supplied via the connection bus B is output from the output terminal 61. The power converter 12 adjusts the current flowing from the output terminal 61 and the output voltage on the basis of a control amount indicated by the controller 13. Further, there is an input voltage range in which the conversion operation is permitted. When an input voltage outside the input voltage range is detected, the power converter 12 may block the output.

The input unit 20 detects an operation of a user and receives an input set to control each unit of the power supply device 1. For example, the input unit 20 may be a touch panel configured integrally with a display unit. The input unit 20 displays a display screen for selecting various types of information. For example, the input unit 20 acquires setting information including a system power use amount set value and the like of AC power supplied from the electric power system 2 and provides the setting information to the controller 13.

The controller 13 is realized by executing a program by a processor such as a central processing unit (CPU), for example. In addition, each component of the controller 13 may be realized by hardware such as large scale integration (LSI), an application specific integrated circuit (ASIC) and a field-programmable gate array (FPGA).

The controller 13 acquires, from the input unit 20, the setting information including the system power use amount set value and the like of the AC power supplied from the electric power system 2. For example, the setting information including the system power use amount set value and the like directly or indirectly designates the upper limit value of the amount of the AC power supplied from the electric power system 2, the upper limit value of the power (DC power) supplied from the electric power generator 3, or the like. For example, when the system power use amount set value directly or indirectly designates the upper limit value of the amount of the AC power supplied from the electric power system 2, the controller 13 determines the upper limit value of the amount of the AC power supplied from the electric power system 2 depending on the system power use amount set value. The system power use amount set value and the upper limit value of the amount of the AC power may be identical to each other or may be different values having a margin there between. The controller 13 controls at least the power converter 16 such that the amount of the AC power supplied from the electric power system 2 does not exceed the upper limit value determined depending on the system power use amount set value and corresponds to the upper limit value.

For example, when the setting information including the system power use amount set value and the like directly or indirectly designates the upper limit value of the amount of the power supplied from the electric power generator 3, the controller 13 determines the upper limit value of the amount of the power supplied from the electric power generator 3 depending on the setting information including the system power use amount set value and the like, in the same manner as described above. The setting information including the system power use amount set value and the like and the upper limit value of the amount of the power supplied from the electric power generator 3 may be identical to each other or may be different values having a margin therebetween. The controller 13 may control at least the power converter 17 such that the amount of the power supplied from the electric power generator 3 does not exceed an upper limit value determined depending on the upper limit value of the power (DC power) supplied from the electric power generator 3 determined as above.

Meanwhile, the controller 13 may be configured to adjust the minimum voltage of the connection bus B. In this case, the controller 13 indicates a target voltage of the voltage output from the power converter 19 to the power converter 19 to adjust the output voltage. Consequently, the minimum voltage of the connection bus B is supplemented according to power supply from the DC power supply 6.

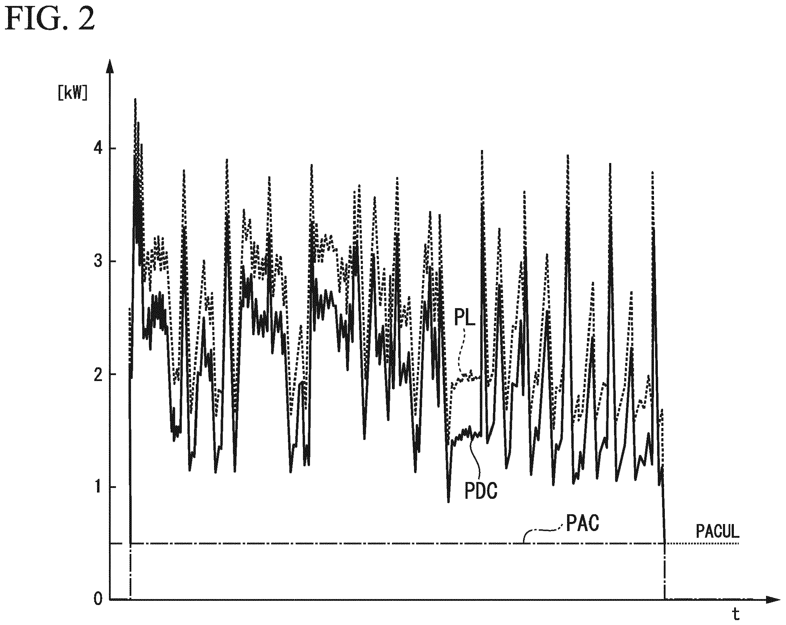

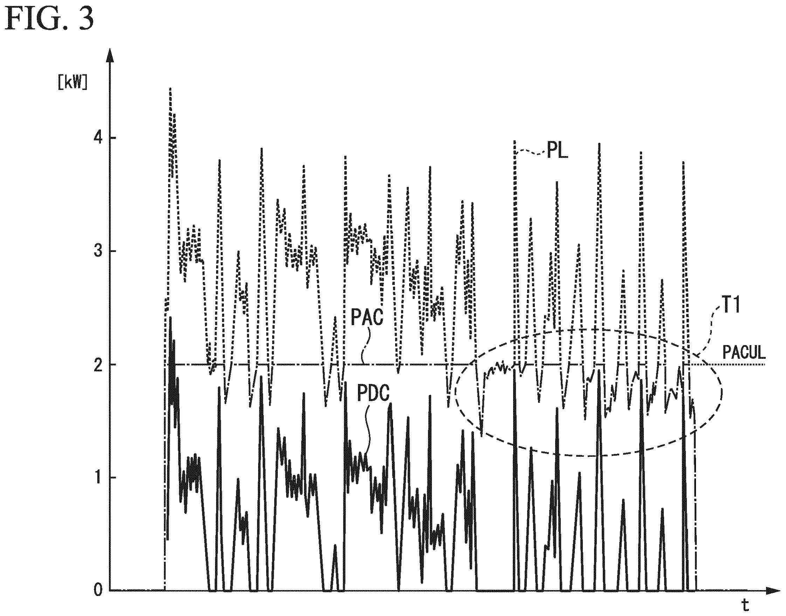

Figs. 2 and 3 are diagrams showing an example of the operation of the power supply device 1. These figures show variations corresponding to several continuous hours in power consumption (PL) of the load 7, AC power (PAC) supplied from the electric power system 2, and DC power (PDC) supplied from the electric power generator 3 (solar power generation apparatus 3A). In these figures, power supplied from the storage battery 18 is not shown.

(Definition of variables)

In the following description, the amount of power supplied from the power converter 16, the amount of power supplied from the power converter 17, and the amount of power consumed due to the load are denoted by PAC, PDC and PL. Further, the output voltage of the power converter 16, the output voltage of the power converter 17, and a voltage detected by the detector 14 (voltage across the terminals of the storage battery 18) are represented by VAC, VPV and VBATT.

The amount of power PL consumed by the load 7 and the amount of DC power PDC randomly vary according to an operating state of the load 7 and a power generating state of the electric power generator 3. An upper limit value PACUL of the amount of AC power PAC is set and is 0.5 kW in the case of Fig. 2 and 2 kW in the case of Fig. 3. It is known from the result of Fig. 2 that a value set as the upper limit value PACUL of the amount of AC power PAC is lower than a minimum value of the amount of power PL consumed by the load 7 and the amounts of power which exceed the upper limit value PACUL are supplied from the electric power generator 3, the storage battery 18 or the DC power supply 6 to the connection bus B, and thus the amount of AC power PAC becomes constant. On the other hand, it is known from the result of Fig. 3 that a value set as the upper limit value PACUL of the amount of AC power PAC is higher than the minimum value of the amount of power PL consumed by the load 7, which results in an oversupply state in the amount of power, and thus a time zone T1 in which the amount of AC power PAC is temporarily lower than the upper limit value PACUL is generated.

As described above, when each supply of power is used in a desired amount of power in the power supply device 1, it is necessary to adjust the output voltage from each unit for the connection bus B. Constraint conditions therefor will be summarized.

<Constraint conditions of output voltage from each unit for connection bus B>

(Precondition)

The DC power supply 6 is an emergency power supply which supplies DC 48 V, for example. The converter 19 receive the power supplied from the DC power supply 6 and adjust the voltage to output. The voltage which can be supplied from the power converter 19 is denoted by VDC48. In the case of the present embodiment, the controller 13 adjusts the output voltage of each unit for the connection bus B such that the current from the DC power supply 6, that is, the current flowing from the power converter 19 to the connection bus B, becomes 0 in at normal times. For simplification of description, a voltage drop by each rectifier is ignored in the following description. Further, a normal time is a state in which each unit does not have a stop state due to a failure, inspection or the like, the electric power system 2 does not have power failure and the like, and power is supplied from the electric power system 2.

As described above, the current flowing from the power converter 19 to the connection bus B can be detected by the detector 15. The controller 13 controls the power supply device 1 such that no current is detected by the detector 15 at normal times. Specifically, the controller 13 controls the power converter 16 and the power converter 17 to adjust the output voltages of the power converter 16 and the power converter 17 such that a direct current flowing from the input terminal 43 connected to the DC power supply 6 to the connection bus B is not generated.

When the voltage of each unit in the above case is summarized, the voltage at the connection bus B needs to be higher than the voltage VDC48 which can be supplied from the power converter 19. In short, the controller 13 controls each unit such that the voltage VAC, VPV and VBATT output from each unit to the connection bus B becomes higher than VDC48. The relationship is represented by expression (1).

$$VDC48 < (VAC, VPV, VBATT) \cdots (1)$$

Hereinafter, each constraint condition in control of each unit of the power supply device 1 will be described. Cases are divided below with reference to the upper limit value PACUL of the amount of power of the power converter 16 and the amount of power PL consumed by the load 7.

(First case: PACUL>PL)

The first case is a case in which the amount of power PL consumed by the load 7 does not exceed the upper limit value PACUL of the amount of power of the power converter 16.

In this case, the amount of power PL consumed by the load 7 can be satisfied only with the amount of power PAC supplied from the power converter 16. The controller 13 causes the load 7 to preferentially consume the power PAC supplied from the power converter 16. Specifically, the controller 13 adjusts the output voltages of the power converter 16 and the power converter 17 such that the output voltage VAC of the power converter 16 is higher than output voltages of other units. Consequently, the amount of power PAC approximately corresponds to the amount of power PL consumed by the load 7.

$$PAC = PL \cdots (2)$$

Further, in the first case, there is a margin corresponding to the amount of power which can be further consumed for the upper limit value PACUL of the amount of power of the power converter 16. Accordingly, power corresponding to (PACUL-PL) may be permitted to be used for charging of the storage battery 18. When the power is charged in the storage battery 18, each unit in the power supply device 1 is adjusted such that a current in the charging direction is detected by the detector 14.

(Second case: PAC<PL<(PACUL+PDCUL))

The second case is a case in which the amount of power PL consumed by the load 7 exceeds the upper limit value PACUL of the amount of power of the power converter 16 but does not exceed the sum of the upper limit value PACUL of the amount of power of the power converter 16 and an upper limit value PDCUL of the amount of power supplied from the power converter 17.

In this case, the output voltages VAC and VPV of the power converter 16 and the power converter 17 are set to approximately correspond to each other and values thereof are set to be higher than the voltage VBATT of the storage battery 18 such that power can be supplied from both the power converter 16 and the power converter 17.

Consequently, (PAC+PDC-PL) can be charged in the storage battery 18 as surplus power.

(Third case: (PAC+PDC)<PL)

The third case is a case in which the amount of power PL consumed by the load 7 exceeds the sum of the upper limit value PACUL of the amount of power of the power converter 16 and the upper limit value PACUL of the amount of power of the power converter 17.

In this case, power is insufficient even when power corresponding to the upper limit value of each of the power converter 16 and the power converter 17 is supplied, and thus the storage battery 18 is controlled to be discharged to supplement insufficient power. In this case, the output voltages VAC and VPV of the power converter 16 and the power converter 17 are set to substantially correspond to the voltage of the storage battery 18. Accordingly, power corresponding to the insufficient amount PAC+PDC-PL can be supplemented with power discharged from the storage battery 18.

By dividing cases as described above, control tailored to the condition of each case is easily performed. The controller 13 includes processing of each case as a control mode, and in selection of each mode, an appropriate control mode may be selected according to information of the present time, history information and the like acquired from each detector and each unit.

(With respect to configuration of power converter 17)

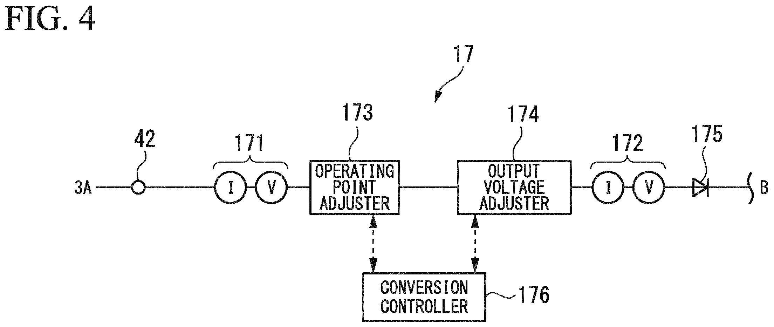

Fig. 4 is a schematic diagram of the power converter 17. The input side (input terminal 42) of the power converter 17 is connected to the solar power generation apparatus 3A and the output side thereof is connected to the connection bus B. For example, the power converter 17 includes detectors 171 and 172, an operating point adjuster 173, an output voltage adjuster 174, a rectifier 175, and a conversion controller 176.

The detector 171 is provided between the input terminal 42 and the operating point adjuster 173 and detects an input current flowing between the input terminal 42 and the operating point adjuster 173 and a voltage (input voltage) across terminals of the input terminal 42. The detector 172 is provided at the output side of the output voltage adjuster 174 and detects a current output from the power converter 17 and an output voltage of the output voltage adjuster 174.

Meanwhile, the operating point of the solar power generation apparatus 3A varies according to characteristics of the solar power generation apparatus 3A and an environment when the power generating operation is performed. The operating point adjuster 173 adjusts the operating point of the solar power generation apparatus 3A connected via the input terminal 42 such that an input voltage for the operating point adjuster 173 becomes constant. By determining the operating point in this manner, a range in which generated power is acquired can be extended even in a case in which brightness of the surroundings is not sufficient. According to the aforementioned configuration, power from the solar power generation apparatus 3A is supplied as a predetermined voltage.

Even when an input voltage is relatively low, the output voltage adjuster 174 can provide power for the connection bus B by changing a duty ratio of a switching element included therein.

In addition, the output voltage adjuster 174 adjusts an output voltage fluctuation range to a voltage range indicated by the conversion controller 176. For example, the output voltage of the power converter 17 for the connection bus B can adjust the voltage fluctuation range to a predetermined voltage determined on the basis of the output voltage of the power converter 16 and the terminal voltage of the storage battery 18. When the actual output voltage deviates from the indicated voltage (voltage range), the output voltage adjuster 174 stops the output operation. The output voltage adjuster 174 adjusts the output voltage such that the output voltage does not exceed an upper limit value of the power indicated by the conversion controller 176.

The rectifier 175 prevents inflow (back flow) of the current from the connection bus B.

The DC-DC conversion controller 176 designates the output voltage of the output voltage adjuster 174 and an upper limit value of supplied power under the control of the controller 13. The conversion controller 176 controls the output voltage adjuster 174 according to control of the controller 13.

Hereinafter, application examples of the present embodiment will be described.

(With respect to control based on measurement information)

Further, the controller 13 may designate the output voltage of the power converter 16 on the basis of acquired measurement information of each unit, and the like. The measurement information of each unit acquired by the controller 13 includes a current value, a voltage value and the like detected by each detector provided in the power supply device 1. Further, the controller 13 may acquire information such as the amount of generated power of the electric power generator 3 and a power storage state (state of charge (SOC) and the like) of the storage battery 18 to monitor a state of an external device connected to the power supply device 1.

For example, in a case in which the amount of generated power of the electric power generator 3 decreases while discharging of the storage battery 18 is suspended and the amount of the AC power is insufficient, and the like, the controller 13 controls the amount of AC power supplied from the electric power system 2 to temporarily increase in order to compensate for the operation of the load 7. Meanwhile, a state in which discharging from the storage battery 18 is suspended includes an over discharged state, failure, inspection and the like of the storage battery 18.

For example, the controller 13 detects a state in which discharging of the storage battery 18 is suspended through the detector 14 and detects a decrease in the amount of generated power of the electric power generator 3 through a decrease in the input current of the power converter 17. In this situation, when the amount of power supplied by the power converter 16 is determined to be insufficient with respect to power consumption of the load 7, the power supply device 1 can use power described below. First power is DC power supplied from the DC power supply 6. Second power is AC power from the electric power system 2. When the second power is used, the controller 13 adjusts the upper limit value of the power converter 16 to temporarily increase the amount of AC power supplied from the system.

As described above, even when a state in which discharging from the storage battery 18 is suspended occurs, the power supply device 1 can supplement insufficient power with power from the DC power supply 6 installed as an emergency power supply of the facility (building).

(Countermeasure for case in which multiple pairs of input terminal 42 and power converter 17 are provided)

The input terminal 42 and the power converter 17 may be paired and a plurality of pairs may be provided. The controller 13 changes setting related to the input applied to the input unit 20 when the number of pairs of the input terminal 42 and the power converter 17 is changed. When the number of pairs is changed in this manner, extension of installations can be easily performed by constructing a main body part of the power supply device 1 such that the main body part can accept the number of pairs to be additionally installed.

(Countermeasure to case in which DC power cannot be supplied to load)

The input terminal 41 is connected to the AC power output terminal 62 in addition to the input side of the power converter 16. Since such branch connection is provided in the power supply device 1, when DC power obtained through the connection bus B cannot be supplied from the output terminal 61 to the load 7, power for supplementing the DC power can be supplied from the AC power output terminal 62 as AC power. For example, when the load 7 includes a power converter 71 which converts AC power into DC power, the load 7 can drive a driving unit 72 with supplied AC power instead of DC power.

Further, the following operation may be performed instead of the above-described operation. When sufficient power cannot be supplied from the output terminal 61 through which some of DC power obtained through the connection bus B is output to the load 7 connected to the output terminal 61, the power supply device 1 is configured such that power from the AC power output terminal 62 is output as AC power. Detection in a case in which sufficient power cannot be supplied to the load 7 connected to the output terminal 61 can be performed through a measurement value detected by the detector 11. For example, the controller 13 may determine that a situation in which sufficient power are not supplied to the load 7 occurs by detecting a case in which a current value flowing through the detector 11 exceeds a predetermined upper limit value or a case in which a voltage detected by the detector 11 decreases below a predetermined lower limit value.

(Load dispersion of power converter 16 and power converter 17)

Meanwhile, the controller 13 can indicate a first power amount representing an upper limit value of the amount of power output from the power converter 16 to the power converter 16 and indicate a second power amount representing an upper limit value of the amount of power output from the power converter 17 to the power converter 17. Further, the controller 13 may determine the ratio of the first power amount indicating the upper limit value of the amount of power output from the power converter 16 to the second power amount indicating the upper limit value of the amount of power output from the power converter 17 on the basis of the amount of power supplied from the output terminal 61 to the load 7. It is possible to distribute power consumption of the load 7 to the power converter 16 and the power converter 17 by determining the first power amount and the second power amount using a predetermined ratio as described above.

(Prevention measure of overdischarge of storage battery 18)

The controller 13 controls discharging from the storage battery 18 according to the operating state of the power converter 12. The controller 13 can protect the storage battery 18 by suspending output from the power converter 12 when power from the power converter 16 or the power converter 17 is insufficient and the storage battery 18 is in an overdischarged state.

As described above, the power supply device 1 of the present embodiment includes the input terminal 41 configured to be supplied AC power from the electric power system 2, the power converter 16 configured to converts AC power supplied via the input terminal 41 into DC power, the input terminal 42 configured to be supplied power from the electric power generator 3, the power converter 17 configured to converts power supplied via the input terminal 42 into DC power, the storage battery 18, the connection bus B connected to the output side of the power converter 16, the output side of the power converter 17 and the storage battery 18, the output terminal 61 configured to output some of DC power obtained via the connection bus B, and the controller 13 configured to controls the power converter 16 such that the amount of AC power supplied from the electric power system 2 does not exceed an upper limit value. The aforementioned power supply device 1 can easily adjust the amount of system power used.

In addition, some or all of the aforementioned functions may be realized by an integrated circuit such as large scale integration (LSI). Each of the aforementioned functions may be individually configured as a processor or some or all of the functions may be integrated into a processor. Furthermore, the circuit integration technique is not limited to LSI and an integrated circuit may be realized as a dedicated circuit or a general-purpose processor. Moreover, when a circuit integration technology which replaces LSI emerges with the progress of semiconductor technology, integrated circuits according to the technology may be used.

Meanwhile, while the power supply device 1 includes the power converter 16 and the power converter 17 in the above description, the power converter 17 may be configured as an external device of the power supply device 1. It is desirable that a voltage applied from the power converter 17 installed outside, or the like be stabilized. For example, when DC power with a stabilized voltage is supplied to the input terminal 42, the connection bus B may be connected to the input terminal 42.

Meanwhile, the AC power may be supplied from the electric power system 2 or an electric power generator which outputs the AC and DC power may be supplied from the electric power generator 3 (Fig. 1) such as a power plant which is configured to convert renewable energy and a fuel cell.

[Industrial Applicability]

It is possible to provide a power supply device which can easily adjust the amount of system power used.

[Reference Signs List]

1 Power supply device
2 Electric power system
3 Electric power generator
3A Solar power generation apparatus
6 DC power supply
7 Load
11, 14, 15 Detector
12, 16, 17, 19 Power converter
13 controller
18 Storage battery
41, 42 Input terminal
61, 62 Output terminal

**Claims**

**1.** A power supply device comprising:

a first input terminal (41) configured to be supplied AC power from a system (2);
a first power converter (16) configured to convert AC power supplied via the first input terminal (41) into DC power;
a second input terminal (42) configured to be supplied power from an electric power generator (3);
a second power converter (17) configured to convert power supplied via the second input terminal (42) into DC power;
a storage battery (18);
a connection bus (B) connected to an output side of the first power converter (16), an output side of the second power converter (17), and the storage battery (18);
an output terminal (61) configured to output some of DC power obtained via the connection bus (B);
a controller (13) configured to control the first power converter (16) such that the amount of AC power supplied from the system (2) does not exceed an upper limit value; and
an AC power output terminal (62) connected to the first input terminal (41), wherein power from the AC power output terminal (62) is output as AC power to a load (7) when sufficient power cannot be supplied from the output terminal (61) through which some of the DC power obtained via the connection bus (B) is output to the load (7) connected to the output terminal (61).

**2.** The power supply device according to claim 1, wherein the controller (13) is configured to control the first power converter (16) such that the amount of AC power supplied from the system (2) does not exceed the upper limit value and corresponds to the upper limit value.

**3.** The power supply device according to claim 1 or 2, wherein the connection bus (B) and the storage battery (18) are connected to each other without having a converter interposed therebetween.

**4.** The power supply device according to any one of claims 1 to 3, wherein the electric power generator (3) is a solar power generation apparatus (3A), and the second power converter (17) is configured to adjust the amount of power supplied from the solar power generation apparatus (3A) such that an input voltage from the solar power generation apparatus (3A) is constant.

**5.** The power supply device according to any one of claims 1 to 4, wherein the controller (13) is configured to adjust an output voltage of the second power converter (17) such that an output voltage of the second power converter (17) for the connection bus (B) becomes a predetermined voltage determined on the basis of an output voltage of the first power converter (16) and a terminal voltage of the storage battery (18).

6. The power supply device according to any one of claims 1 to 5, wherein the controller (13) is configured to monitor the amount of generated power of the electric power generator (3) and a power storage state of the storage battery (18), and to control the amount of AC power supplied from the system (2) to temporarily increase when the amount of generated power of the electric power generator (3) decreases while discharging of the storage battery (18) is suspended and the amount of the AC power is insufficient.

7. The power supply device according to any one of claims 1 to 6, comprising an input unit (20) which can include a plurality of pairs of the second input terminal (42) and the second power converter (17) and which is configured to receive a set input, wherein the controller (13) is configured to change settings related to the input received by the input unit (20) when the number of pairs changes.

8. The power supply device according to any one of claims 1 to 7, wherein the controller (13) is configured to indicate a first power amount representing an upper limit value of the amount of power output from the first power converter (16) to the first power converter (16) and to indicate a second power amount representing an upper limit value of the amount of power output from the second power converter (17) to the second power converter (17).

9. The power supply device according to claim 8, wherein the controller (13) is configured to determine a ratio of the first power amount to the second power amount depending on the amount of power supplied from the output terminal (61).

10. The power supply device according to any one of claims 1 to 9, comprising a third power converter (12) which is configured to convert DC power supplied from the connection bus (B) and provides the converted DC power to the output terminal (61), wherein the controller (13) is configured to control discharging from the storage battery (18) according to an operating state of the third power converter (12).

11. The power supply device according to any one of claims 1 to 10, comprising a third input terminal (43) which supplies DC power to the connection bus (B), wherein the controller (13) is configured to control the first power converter (16) and the second power converter (17) such that a direct current flowing from the third input terminal (43) to the connection bus (B) is not generated.

**Patentansprüche**

1. Stromversorgungsvorrichtung, die folgendes umfasst:

   einen ersten Eingangsanschluss (41), der für eine Versorgung mit Wechselstromleistung von einem System (2) gestaltet ist;
   einen ersten Stromrichter (16), der für die Umwandlung der über den ersten Eingangsanschluss (41) zugeführten Wechselstromleistung in Gleichstromleistung gestaltet ist;
   einen zweiten Eingangsanschluss (42), der für eine Versorgung mit Leistung von einem elektrischen Stromgenerator (3) gestaltet ist;
   einen zweiten Stromrichter (17), der für die Umwandlung der über den zweiten Eingangsanschluss (42) zugeführten Leistung in Gleichstromleistung gestaltet ist;
   eine Speicherbatterie (18);
   einen Verbindungsbus (B), der mit einer Ausgangsseite des ersten Stromrichters (16), einer Ausgangsseite des zweiten Stromrichters (17) und der Speicherbatterie (18) verbunden ist;
   einen Ausgangsanschluss (61), der zur Ausgabe eines Teils der über den Verbindungsbus (B) erhaltenen Gleichstromleistung gestaltet ist;
   eine Steuereinheit (13), die zur Steuerung des ersten Stromrichters (16) gestaltet ist, so dass die von dem System (2) zugeführte Menge an Wechselstromleistung einen oberen Grenzwert nicht überschreitet; und
   einen Wechselstrom-Ausgangsanschluss (62), der mit dem ersten Eingangsanschluss (41) verbunden ist, wobei Leistung von dem Wechselstrom-Ausgangsanschluss (62) als Wechselstromleistung an einen Verbraucher (7) ausgegeben wird, wenn durch den Ausgangsanschluss (61) nicht ausreichend Leistung zugeführt werden kann, wodurch ein Teil des über den Verbindungsbus (B) erhaltenen Gleichstromleistung an den mit dem Ausgangsanschluss (61) verbundenen Verbraucher (7) ausgegeben wird.

2. Stromversorgungsvorrichtung nach Anspruch 1, wobei die Steuereinheit (13) so gestaltet ist, dass sie den ersten Stromrichter (16) so steuert, dass die Menge der von dem System (2) zugeführten Wechselstromleistung den oberen Grenzwert nicht überschreitet und dem oberen Grenzwert entspricht.

3. Stromversorgungsvorrichtung nach Anspruch 1 oder 2, wobei der Verbindungsbus (B) und die Speicherbatterie (18) miteinander verbunden sind, ohne dass sich dazwischen ein Wandler befindet.

4. Stromversorgungsvorrichtung nach einem der Ansprüche 1 bis 3, wobei der elektrische Stromgenerator (3) eine Solarenergieerzeugungsvorrichtung (3A) ist, und
wobei der zweite Stromrichter (17) so gestaltet ist, dass er die Menge der von der Solarenergieerzeugungsvorrichtung (3A) zugeführte Leistungsmenge so anpasst, dass eine Eingangsspannung von der Solarenergieerzeugungsvorrichtung (3A) konstant ist.

5. Stromversorgungsvorrichtung nach einem der Ansprüche 1 bis 4, wobei die Steuereinheit (13) so gestaltet ist, dass sie eine Ausgangsspannung des zweiten Stromrichters (17) so anpasst, dass eine Ausgangsspannung des zweiten Stromrichters (17) für den Verbindungsbus (B) eine vorbestimmte Spannung wird, die bestimmt wird auf der Basis einer Ausgangsspannung des ersten Stromrichters (16) und einer Anschlussspannung der Speicherbatterie (18).

6. Stromversorgungsvorrichtung nach einem der Ansprüche 1 bis 5, wobei die Steuereinheit (13) zur Überwachung der durch den elektrischen Stromgenerator (3) erzeugten Leistungsmenge und eines Stromspeicherzustands der Speicherbatterie (18) gestaltet ist sowie zur Steuerung der Menge der von dem System (2) zugeführten Wechselstromleistung, so dass diese temporär ansteigt, wenn die Menge der durch den elektrischen Stromgenerator (3) erzeugten Leistung abnimmt, während die Entladung der Speicherbatterie (18) unterbrochen wird und die Menge der Wechselstromleistung unzureichend ist.

7. Stromversorgungsvorrichtung nach einem der Ansprüche 1 bis 6, die eine Eingangseinheit (20) umfasst, die eine Mehrzahl von Paaren des zweiten Eingangsanschlusses (42) und des zweiten Stromrichters (17) aufweisen kann, und wobei sie für den Empfang einer festgelegten Eingabe gestaltet ist,
wobei die Steuereinheit (13) so gestaltet ist, dass sie die Einstellungen in Bezug auf die von der Eingangseinheit (20) empfangenen Eingabe anpasst, wenn sich die Anzahl der Paare verändert.

8. Stromversorgungsvorrichtung nach einem der Ansprüche 1 bis 7, wobei die Steuereinheit (13) so gestaltet ist, dass sie eine erste Leistungsmenge anzeigt, die einen oberen Grenzwert der ausgegebenen Leistungsmenge von dem ersten Stromrichter (16) an den ersten Stromrichter (16) darstellt, und dass sie eine zweite Leistungsmenge anzeigt, die einen oberen Grenzwert der ausgegebenen Leistungsmenge von dem zweiten Stromrichter (17) an den zweiten Stromrichter (17) darstellt.

9. Stromversorgungsvorrichtung nach Anspruch 8, wobei die Steuereinheit (13) so gestaltet ist, dass sie ein Verhältnis der ersten Leistungsmenge zu der zweiten Leistungsmenge abhängig von der von dem Ausgangsanschluss (61) zugeführten Leistungsmenge bestimmt.

10. Stromversorgungsvorrichtung nach einem der Ansprüche 1 bis 9, wobei die Vorrichtung einen dritten Stromrichter (12) umfasst, der so gestaltet ist, dass er von dem Verbindungsbus (B) zugeführte Gleichstromleistung umwandelt und die umgewandelte Gleichstromleistung an den Ausgangsanschluss (61) bereitstellt;
wobei die Steuereinheit (13) so gestaltet ist, dass sie die Entladung von der Speicherbatterie (18) gemäß einem Betriebszustand des dritten Stromrichters (12) steuert.

11. Stromversorgungsvorrichtung nach einem der Ansprüche 1 bis 10, wobei die Vorrichtung einen dritten Eingangsanschluss (43) umfasst, der Gleichstromleistung an den Verbindungsbus (B) bereitstellt;
wobei die Steuereinheit (13) so gestaltet ist, dass sie den ersten Stromrichter (16) und den zweiten Stromrichter (17) so steuert, dass ein von dem dritten Eingangsanschluss (43) zu dem Verbindungsbus (B) fließender Gleichstrom nicht erzeugt wird.

**Revendications**

1. Dispositif d'alimentation électrique comprenant :

une première borne d'entrée (41) conçue pour être alimentée en courant alternatif par un système (2) ;
un premier convertisseur de puissance (16) conçu pour convertir le courant alternatif fourni par la première borne d'entrée (41) en courant continu ;
une deuxième borne d'entrée (42) conçue pour être alimentée par un générateur électrique (3) ;
un deuxième convertisseur de puissance (17) conçu pour convertir la puissance fournie par la deuxième borne d'entrée (42) en courant continu ;
une batterie de stockage (18) ;
un bus de connexion (B) connecté à un côté sortie du premier convertisseur de puissance (16), à un côté sortie du deuxième convertisseur de puissance (17) et à la batterie de stockage (18) ;
une borne de sortie (61) conçue pour délivrer une partie du courant continu obtenu par l'intermédiaire du bus de connexion (B) ;

un dispositif de commande (13) conçu pour commander le premier convertisseur de puissance (16) de sorte que la quantité de courant alternatif fournie par le système (2) ne dépasse pas une valeur limite supérieure ; et
une borne de sortie de courant alternatif (62) connectée à la première borne d'entrée (41), la puissance provenant de la borne de sortie de courant alternatif (62) étant délivrée en tant que courant alternatif à une charge (7) lorsqu'une puissance suffisante ne peut pas être fournie par la borne de sortie (61) par laquelle une partie du courant continu obtenu par l'intermédiaire du bus de connexion (B) est délivrée à la charge (7) connectée à la borne de sortie (61).

2. Dispositif d'alimentation électrique selon la revendication 1, le dispositif de commande (13) étant conçu pour commander le premier convertisseur de puissance (16) de sorte que la quantité de courant alternatif fournie par le système (2) ne dépasse pas la valeur limite supérieure et corresponde à la valeur limite supérieure.

3. Dispositif d'alimentation électrique selon la revendication 1 ou 2, le bus de connexion (B) et la batterie de stockage (18) étant connectés l'un à l'autre sans qu'un convertisseur ne soit interposé entre eux.

4. Dispositif d'alimentation électrique selon l'une quelconque des revendications 1 à 3, le générateur d'électricité (3) étant un appareil de production d'électricité solaire (3A), et
le deuxième convertisseur de puissance (17) étant conçu pour ajuster la quantité de puissance fournie par l'appareil de production d'électricité solaire (3A) de sorte qu'une tension d'entrée de l'appareil de production d'électricité solaire (3A) soit constante.

5. Dispositif d'alimentation électrique selon l'une quelconque des revendications 1 à 4, le dispositif de commande (13) étant conçu pour ajuster une tension de sortie du deuxième convertisseur de puissance (17) de sorte qu'une tension de sortie du deuxième convertisseur de puissance (17) pour le bus de connexion (B) devienne une tension prédéfinie déterminée sur la base d'une tension de sortie du premier convertisseur de puissance (16) et d'une tension aux bornes de la batterie de stockage (18).

6. Dispositif d'alimentation électrique selon l'une quelconque des revendications 1 à 5, le dispositif de commande (13) étant conçu pour surveiller la quantité de puissance générée du générateur de puissance électrique (3) et un état de stockage de puissance de la batterie de stockage (18), et pour commander la quantité de courant alternatif fournie par le système (2) pour augmenter temporairement lorsque la quantité de puissance générée du générateur de puissance électrique (3) diminue alors que la décharge de la batterie de stockage (18) est suspendue et que la quantité de courant alternatif est insuffisante.

7. Dispositif d'alimentation électrique selon l'une quelconque des revendications 1 à 6, comprenant une unité d'entrée (20) qui peut inclure une pluralité de paires de la deuxième borne d'entrée (42) et du deuxième convertisseur de puissance (17) et qui est conçue pour recevoir une entrée définie,
le dispositif de commande (13) étant conçu pour modifier les paramètres liés à l'entrée reçue par l'unité d'entrée (20) lorsque le nombre de paires change.

8. Dispositif d'alimentation électrique selon l'une quelconque des revendications 1 à 7, le dispositif de commande (13) étant conçu pour indiquer une première quantité de puissance représentant une valeur limite supérieure de la quantité de puissance délivrée par le premier convertisseur de puissance (16) au premier convertisseur de puissance (16) et pour indiquer une seconde quantité de puissance représentant une valeur limite supérieure de la quantité de puissance délivrée par le deuxième convertisseur de puissance (17) au deuxième convertisseur de puissance (17).

9. Dispositif d'alimentation électrique selon la revendication 8, le dispositif de commande (13) étant conçu pour déterminer un rapport entre la première quantité de puissance et la deuxième quantité de puissance en fonction de la quantité de puissance fournie par la borne de sortie (61).

10. Dispositif d'alimentation électrique selon l'une quelconque des revendications 1 à 9, comprenant un troisième convertisseur de puissance (12) qui est conçu pour convertir le courant continu fourni par le bus de connexion (B) et fournit le courant continu converti à la borne de sortie (61),
le dispositif de commande (13) étant conçu pour commander la décharge de la batterie de stockage (18) en fonction d'un état de fonctionnement du troisième convertisseur de puissance (12).

11. Dispositif d'alimentation électrique selon l'une quelconque des revendications 1 à 10, comprenant une troisième borne d'entrée (43) qui fournit du courant continu au bus de connexion (B),
le dispositif de commande (13) étant conçu pour commander le premier convertisseur de puissance (16) et le deuxième convertisseur de puissance (17) de sorte qu'un courant continu circulant de la troisième borne d'entrée (43) vers le bus de connexion (B) ne soit pas généré.

**FIG. 1**

EP 3 346 570 B1

FIG. 2

EP 3 346 570 B1

FIG. 3

EP 3 346 570 B1

# FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11332128 A
- JP 2015061439 A
- US 2018361859 A1
- JP 2014165952 A